# EUROPEAN PATENT APPLICATION

(11) **EP 3 174 222 A1**
(43) Date of publication of application: **31.05.2017**
(21) Application number: 15196605.8
(22) Date of filing: 26.11.2015
(51) Int. Cl.: H04B 7/155

(54) **AN ANTENNA ASSEMBLY, A WIRELESS COMMUNICATION SYSTEM AND A METHOD FOR SHARING RESOURCES OF AN ANTENNA IN A WIRELESS COMMUNICATION SYSTEM**

(71) Applicant: Advanced Digital Broadcast S.A., 1292 Chambesy (CH)
(72) Inventor: Blonski, Pawel, 65-119 Zielona Gora (PL)
(74) Representative: Kancelaria Eupatent.pl Sp. z.o.o

(57) **Abstract**

An antenna assembly (30) comprising: a first antenna (31) configured to communicate via a first wireless channel (12); a second antenna (32) configured to communicate via a second wireless channel (13); and a connector (31) communicatively connecting the first antenna (31) with the second antenna (32), the connector comprising a controller (34) configured to perform data processing necessary to allow transmission of a signal received from the first communication channel (12) via the second communication channel (13) and vice versa.

## Description

### TECHNICAL FIELD

The present invention relates to an antenna assembly and to sharing resources of an antenna in a wireless communication system over a plurality of devices.

### BACKGROUND

Many electronic devices comprise an internal antenna that enables communication of the electronic device via a wireless communication channel. Various wireless communication technologies have been developed, such as cellular network standards (in particular, 3G, 4G), WLAN, WiFi, WiMAX, Bluetooth, etc. These wireless technologies differ in many factors, including operating frequency and therefore an antenna required to facilitate communication over that frequency. Typical consumer electronic devices have embedded only a limited number of wireless technologies, depending on the type of the device.

Wireless communication is effective only when antennas of two communicating devices are in an effective range, i.e. they can receive the signal transmitted by another antenna. The effective range depends not only on the distance between the antennas and the transceivers, but also on obstacles between the antennas, which are often present in metropolitan areas, such as buildings, walls, tunnels etc.

For this reason, the communication capabilities of consumer electronic devices are often degraded depending on the position of operation, e.g. underground tunnels often disrupt operation of telephone communication over a wireless network, wherein the base transceiver station antenna is located outside the tunnel.

One way to improve the communication capabilities of a wireless system is to increase the number of system infrastructure antennas, e.g. to install a more dense network of base transceiver stations for a cellular network system, e.g. install antennas inside buildings or in tunnels. This is a complicated and costly solution and is performed typically where the number of wireless service customers is sufficiently high to justify the cost and effort of installation.

There is therefore a need to provide an alternative way of improving the coverage of a wireless communication network.

### SUMMARY OF THE INVENTION

There is presented an antenna assembly comprising: a first antenna configured to communicate via a first wireless channel; a second antenna configured to communicate via a second wireless channel; and a connector communicatively connecting the first antenna with the second antenna, the connector comprising a controller configured to perform data processing necessary to allow transmission of a signal received from the first communication channel via the second communication channel and vice versa.

Preferably, the first wireless channel is of the same type as the second wireless channel.

Preferably, the first wireless channel is of a different type as the second wireless channel.

Preferably, the controller comprises a data converter configured to convert data between different communication standards.

Preferably, the antenna assembly further comprises an access manager for controlling access of external devices to the resources of the antenna assembly.

Preferably, the antenna assembly comprises a plurality of antennas of the same type as the first antenna and/or a plurality of antennas of the same type as the second antenna.

There is also presented a method for sharing resources of an antenna in a wireless communication system over a plurality of external devices, the method comprising: providing an antenna assembly as described above; at the antenna assembly : receiving a request from the external device to access to resources of the antenna assembly; allowing the external device to access the first wireless channel via the second wireless channel.

Preferably, the method further comprises determining whether the external device has access rights to use the resources of the antenna assembly.

There is also presented a wireless communication system comprising an antenna assembly configured to sharing resources of the antenna assembly as described above.

There is also presented a method for wireless communication, the method comprising: providing a mobile device configured to communicate via a first channel by means of the mobile device antenna; discovering, by the mobile device, a possibility to communicate via the first channel, by means of an antenna assembly as described above; determining whether a quality of service of the first channel provided by the antenna assembly is superior with respect to the quality of service provided by the mobile device antenna; in case the quality of service provided by the antenna assembly is superior with respect to the quality of service provided by the mobile device antenna, communicating with the antenna assembly to communicate via the first channel via the antenna assembly.

Preferably, the step of discovering is effected via a second communication channel.

Preferably, the step of discovering includes determining whether a service provided by the antenna assembly is compliant with the service offered by the mobile device's internal antenna.

Preferably, the quality of service is one or more parameters selected from a group comprising: a bit rate, an error rate, a ping time, a signal strength, a signal to noise ratio.

There is also presented a computer program comprising program code means for performing all the steps of the methods as described above when said program is run on a computer, as well as a computer readable medium storing computer-executable instructions performing all the steps of the methods as described when executed on a computer.

### BRIEF DESCRIPTION OF DRAWINGS

The present invention is shown by means of exemplary embodiments on a drawing, in which:
Fig. 1 shows schematically a communication system according to the invention;
Fig. 2 shows schematically a structure of an antenna assembly according to the invention;
Fig. 3 shows schematically a method for sharing resources of the antenna assembly according to the invention;
Fig. 4 shows schematically a conversion object;
Fig. 5 shows a procedure for selection of the communication method by a mobile device configured to communicate via the service channel by means of its own internal antenna.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

### DETAILED DESCRIPTION

In general, the present invention concerns an antenna system, to which mobile devices may connect, using a first communication channel (e.g. Bluetooth), in order to communicate using the antenna to communicate over a second communication channel (e.g. LTE) supported by the antenna. For example, an LTE antenna system is located on a rooftop of a house. Mobile devices have themselves a capability of communicating over LTE, but inside the house their internal antennas provide lower quality of service than offered by the LTE antenna system located on the rooftop. Therefore, the LTE antenna system, located on the rooftop, shares its resources, while mobile devices present inside the house communicate with the LTE antenna system over Bluetooth 4.0 or WiFi. The mobile devices send/receive, over the first communication channel, data they would normally send/receive using their internal antenna.

The invention is designed to operate without any intervention from users of mobile devices, hence not causing any burden for them.

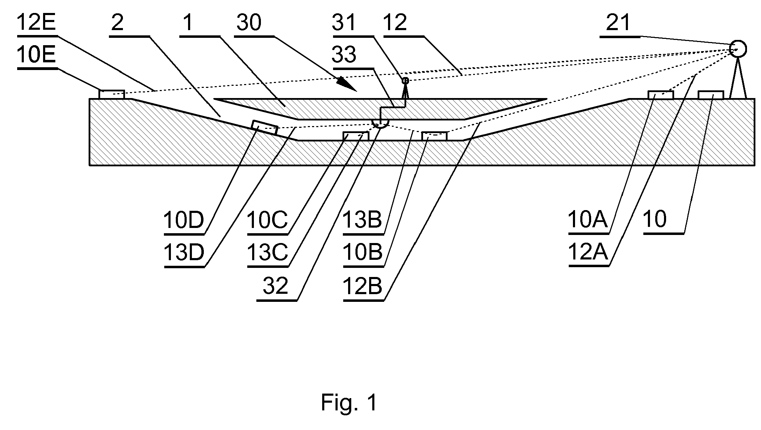

Fig. 1 presents an example of an environment, wherein the system according to the present invention can be usefully employed. The environment can be an area of inside a land 1, wherein a tunnel 2 is made. Entities, such as cars or people, may move within the environment, including the tunnel 2. The entities may have their own portable communication devices 10 that may communicate via one or more particular wireless communication channels. For example, the devices 10 may communicate with a cellular network base transceiver station 21 over a GSM channel. It is assumed that when the device 10 is in positions 10A, 10B, 10E, it may communicate directly with the station 21 via established wireless communication channels 12A, 12B, 12E (for simplicity only, they have been schematically indicated as dotted lines).

However, when the device 10 is in positions 10C, 10D, its capability to communicate with the station 21 may be highly disrupted or impossible (for example, the distance to the station is high and there is no line of sight between the antennas of 10 and 21).

In order to solve this problem, the system employs an antenna assembly 30 that comprises a first antenna 31 (called a service antenna) that may communicate with the antenna of the base transceiver station 21 via a first wireless communication channel 12 (called a service channel). For example, the service antenna 31 may be installed in a position wherein there is a clear path for the wireless signal to travel between the antennas 21, 31 or the service antenna 31 may have enough power to emit signal that can reach the antenna 21.

The antenna assembly 30 further comprises a second antenna 32 (called an access antenna) that may communicate with the communication devices 10 via a second wireless communication channel 13B, 13C, 13D (called an access channel).

The service antenna 31 is communicatively connected with the access antenna 32 via a connector 33, so that data can be transmitted from the communication device 10 via the access channel 13B, 13C, 13D to the access antenna 32, then via the connector 33 the service antenna 31 and then via the first wireless communication channel to the base transceiver station 21 and vice versa.

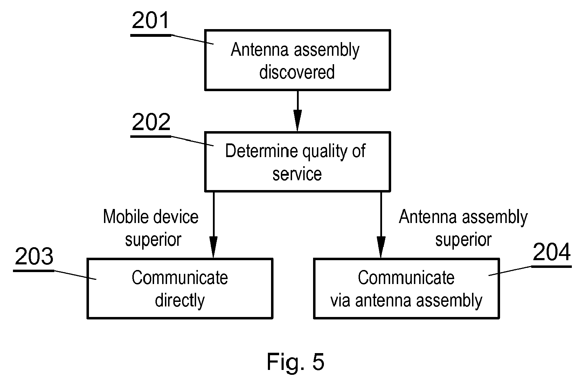

Therefore, when the communication device 10 is in the position 10C or 10D, it may communicate with the base transceiver station 21 via the antenna assembly 30 that may share its resources with the communication devices 10. When the communication device 10 is in the position 10B wherein it can communicate both with the station 21 and the access antenna 32, the device 10 may take a decision on the selection of appropriate communication channel, as described with reference to Fig. 5 (for example, it may select a channel with a higher signal quality).

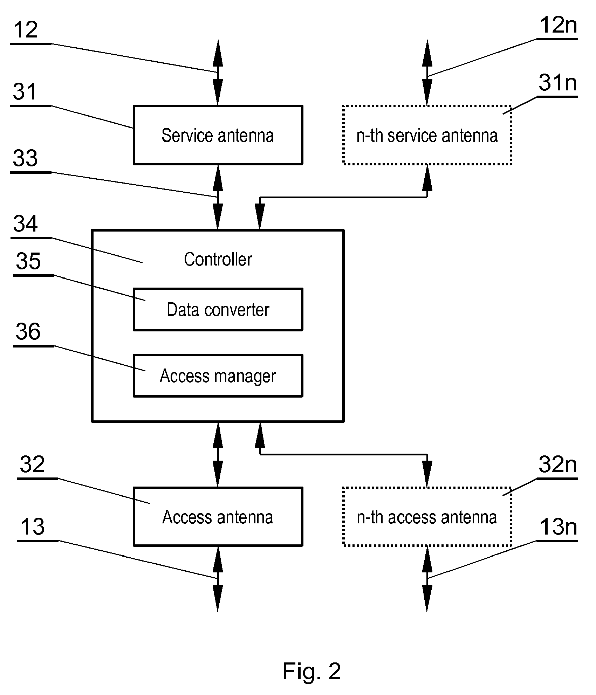

Fig. 2 shows schematically a structure of an antenna assembly according to the invention. The antenna assembly 30 comprises a service antenna 31 configured to transmit and receive signals over a first wireless communication channel and an access antenna 32 configured to transmit and receive signals over a second wireless communication channel.

The service antenna 31 and the access antenna 32 may be the same or different. The antennas may differ in their signal power (e.g. one antenna may be low power and the other antenna may be high power), polarization (e.g. one antenna may be directional and the other may be omnidirectional), signal band (e.g. one antenna may communicate over a different frequency than another antenna), etc.

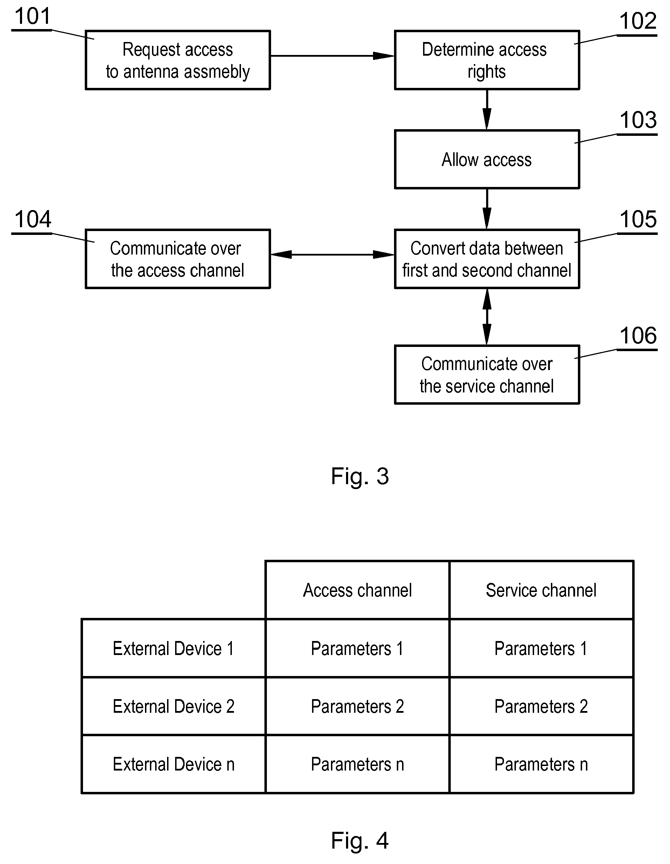

The antennas 31, 32 are connected by a connector 33 that comprises a controller 34 configured to perform data processing necessary to allow transmission of the signal received from the first communication channel via the second communication channel and vice versa. For example, if the service antenna 31 is configured to communicate via a different wireless standard than the access antenna 32, the controller 34 may comprise a data converter 35 for converting data between the communication standards. Operation of the data converter 35 may be configured by a conversion data object (e.g. a table) having an exemplary structure as shown in Fig. 4, wherein for each external device connected to the antenna assembly, there are specified access channel parameters and service channel parameters. The parameters may define e.g. the bandwidth available to that device available amount of data for transmission, available connection time, available services etc.

The controller 34 may further comprise an access manager 36 for controlling the access of external devices 10 to the resources of the antenna assembly. For example, the access manager 36 may allow a plurality of users to use the antenna assembly. The access may be limited by e.g. requiring a special pass-code to be entered. The access manager 36 may further inform the potential users, via the access channel, about the antenna assembly properties, such as supported bands, types of communication, current load, operator etc.

For example, the antenna assembly may be provided to be shared by multiple clients, using a local communication channel via the access antenna 32 (such as Bluetooth or WiFi) and communicate externally via the service antenna through another communication channel (such GSM, GPS, walkie-talkie (FRS/GMRS)). This allows to access to the first communication channel to devices that are not able to communicate via this channel, but have the capability to communicate via the access channel.

Alternatively, the antenna assembly may operate the same type of wireless communication channels, wherein the service antenna is located in a position allowing better communication with the communication system (e.g. a GSM antenna outside a tunnel) and the access antenna is located in a position that is better accessible to the users (e.g. a GSM antenna inside a tunnel).

The antenna assembly may further comprise additional access antennas 32n to communicate via additional wireless access channels 13n that are of the same type as the main access antenna 32 (to increase the number of users that can use the antenna assembly) or of a different type as the main access antenna 32 (to increase the number of wireless channel types via which users may connect to the antenna assembly).

The antenna assembly may further comprise additional service antennas 31 n to communicate via additional wireless service channels 12n that are of the same type as the main service antenna 31 (to increase the coverage of the antenna assembly, e.g. a plurality of directional antennas directed in various directions) or of a different type as the main service antenna 31 (to increase the number of wireless channel types serviced by the antenna assembly).

Fig. 3 shows schematically a method for sharing resources of the antenna assembly according to the invention. The steps in the left column are performed by the communication device 10 and the steps in the right column are performed by the antenna assembly 30.

First, the communication device requests in step 101 access, using a local communication channel, to the antenna assembly. At this time the first communication device may identify its requirements with respect to the external communication channel. This step may be preceded by the communication device detecting the antenna assembly in the vicinity. For example, a Bluetooth or Wi-Fi accessible antenna may be detected via a public discovery feature available in the respective communication standards.

In step 102, the antenna assembly determines access rights, e.g. verifies whether the communication device is allowed to use the antenna resources (for example, only devices having access to a prepaid service may be granted access, or grant of access may require payment at the time of establishing communication).

After successful authorization of the communication device, the access rights are granted in step 103 and the device is informed accordingly. During the handshaking procedure in steps 101-103 additional information may be exchanged, such as the types of service (e.g. communication channels handled) offered by the antenna assembly and the types of service required by the communication device (e.g. access to a particular wireless communication channel).

In step 104 the device may establish communication with the antenna assembly via the access channel 13 and the antenna assembly may handle the communication via the first communication channel in step 106 with an external entity to which the communication device requests access. The data converter 35 converts in step 105 the data between two transmission protocols that may be employed by the two communication channels 12, 13, for example provides appropriate data encapsulation and facilitates appropriate configuration in case any parameters are required by the communication over a given service channel.

For example, a mobile phone 10 may transmit to the antenna assembly 30 data it normally would transmit to a base transmitter station 21, but encapsulated over a different communication channel than a typical GSM channel (such as Bluetooth). The antenna assembly 20 may receive the data over the Bluetooth channel 13 and convert the data to be transmitted appropriately via the GSM channel 12.

When the communication device detects that the environment has changed and it can handle communication itself via the first channel, it may disconnect from the antenna assembly and attempt to communicate with the requested entity via the first channel directly.

Fig. 5 presents a procedure for selection of the communication method by a mobile device, configured to communicate via the service channel 12 by means of its own internal antenna. The procedure starts in step 201 by discovering (via the access channel 13) by the mobile device that an antenna assembly is within its range and it allows to communicate via the service channel 12. At this step the device may check whether a service provided by the antenna assembly 30 is compliant with the service offered by the mobile device's internal antenna and continue only after positive verification. Then the device may determine in step 202 whether a quality of service of the service channel 12 provided by the antenna assembly 30 is superior with respect to the quality of service provided by the mobile device internal antenna. In case the quality of service provided by the antenna assembly 30 is superior with respect to the quality of service provided by the mobile device internal antenna, the device may attempt in step 204 to communicate with the antenna assembly 30 to communicate via the service channel via the antenna assembly 30. Otherwise, the device may communicate via the service channel 12 using its own internal antenna. The quality of service can be determined by using one or a combination of a plurality of the following parameters: a bit rate, an error rate, a ping time, a signal strength, a signal to noise ratio.

The presented invention can be used to solve various technical problems related to improving communication range of cellular networks.

For example, it could be used to improve accessibility to a particular wireless channel in an area for a plurality of users. For example, a GPS signal may be of a poor quality inside a house in a downtown area (or in a mountain area) - the antenna assembly according to the invention could be installed such that the service GPS antenna is located at the roof and the access low-power GPS antenna is located inside the house so that the house occupants can connect their phones to the access the GPS antenna. The antenna assembly could be also used by other in-house systems, such as an alarm system. Moreover, if the antenna assembly has a (main or additional) access antenna of a different type than the main GPS antenna, the GPS services can be made accessible to devices that are not capable of GPS communication (e.g. via WiFi-type access channel).

The invention presented solves the problem of providing an alternative way of improving the coverage of a wireless communication network. It also increases the ease of use of a wireless system. It allows for easy improvement of the wireless communication system by adding additional wireless channels or improving the coverage of existing channels. It improves the quality of signal accessible to users of communication devices at the vicinity of the antenna assembly.

The implementation of the invention is effected by the particular computer systems and computer-executed methods. Thus the machine or transformation test is therefore fulfilled and the idea is not abstract.

It can be easily recognized, by one skilled in the art, that the aforementioned system and method for sharing an antenna in a wireless communication system may be performed and/or controlled by one or more computer programs. Such computer programs are typically executed by utilizing the computing resources of the device. The computer programs can be stored in a non-volatile memory, for example a flash memory or in a volatile memory (or otherwise a non-transitory computer readable medium), for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

In addition, any combination of the appended claims in envisaged in the present application.

## Claims

1. An antenna assembly (30) comprising:
- a first antenna (31) configured to communicate via a first wireless channel (12);
- a second antenna (32) configured to communicate via a second wireless channel (13); and
- a connector (31) communicatively connecting the first antenna (31) with the second antenna (32), the connector comprising a controller (34) configured to perform data processing necessary to allow transmission of a signal received from the first communication channel (12) via the second communication channel (13) and vice versa.

2. The antenna assembly according to claim 1, wherein the first wireless channel (12) is of the same type as the second wireless channel (13).

3. The antenna assembly according to claim 1, wherein the first wireless channel (12) is of a different type as the second wireless channel (13).

4. The antenna assembly according to any of previous claims, wherein the controller (34) comprises a data converter (35) configured to convert data between different communication standards.

5. The antenna assembly according to any of previous claims, further comprising an access manager (36) for controlling access of external devices (10) to the resources of the antenna assembly (30).

6. The antenna assembly according to any of previous claims, comprising a plurality of antennas (31 n) of the same type as the first antenna (31) and/or a plurality of antennas (32n) of the same type as the second antenna (32).

7. A method for sharing resources of an antenna in a wireless communication system over a plurality of external devices (10), the method comprising:
- providing an antenna assembly (30) according to any of claims 1-6;
- at the antenna assembly (30):
- receiving a request from the external device (10) to access to resources of the antenna assembly (30); and
- allowing the external device (10) to access the first wireless channel (12) via the second wireless channel (13).

8. The method according to claim 7, further comprising determining (102) whether the external device (10) has access rights to use the resources of the antenna assembly (30).

9. A computer program comprising program code means for performing all the steps of the method according to any of claims 7-8 when said program is run on a computer.

10. A computer readable medium storing computer-executable instructions performing all the steps of the method according to any of claims 7-8 when executed on a computer.

11. A wireless communication system comprising an antenna assembly (30) configured to sharing resources of the antenna assembly (30) according to any of claims 7-8.

12. A method for wireless communication, the method comprising:
• providing a mobile device (10) configured to communicate via a first channel (12) by means of the mobile device antenna;
• discovering (201), by the mobile device (10), a possibility to communicate via the first channel (12), by means of an antenna assembly (30) according to any of claims 1-6;
• determining (202) whether a quality of service of the first channel (12) provided by the antenna assembly (30) is superior with respect to the quality of service provided by the mobile device antenna; and
• in case the quality of service provided by the antenna assembly (30) is superior with respect to the quality of service provided by the mobile device antenna, communicating (204) with the antenna assembly (30) to communicate via the first channel via the antenna assembly (30).

13. The method according to claim 12, wherein the step of discovering (201) is effected via a second communication channel (13).

14. The method according to any of claims 12-13, wherein the step of discovering (201) includes determining whether a service provided by the antenna assembly (30) is compliant with the service offered by the mobile device's internal antenna.

15. The method according to any of claims 12-14, wherein the quality of service is one or more parameters selected from a group comprising: a bit rate, an error rate, a ping time, a signal strength, a signal to noise ratio.

## Amended claims

### Amended claims in accordance with Rule 137(2) EPC.

1. An antenna assembly (30) comprising:
- a first antenna (31) configured to communicate via a first wireless channel (12);
- a second antenna (32) configured to communicate via a second wireless channel (13); and
- a connector (31) communicatively connecting the first antenna (31) with the second antenna (32), the connector comprising a controller (34) configured to perform data processing necessary to allow transmission of a signal received from the first communication channel (12) via the second communication channel (13) and vice versa;
**characterized in that**
- the controller (34) is configured to perform data processing that comprises encapsulating data of the first wireless channel (12) before transmission of that data over the second wireless channel (13) and vice versa;
- and the connector (31) further comprises an access manager (36) for controlling access of external devices (10) to the resources of the antenna assembly (30) wherein the access manager (36) is configured to inform an external device (10), via the second wireless channel (13), about the antenna assembly properties, including the communication supported by the antenna assembly.

2. The antenna assembly according to claim 1, wherein the access manager (36) is configured to inform the external device (10), via the second wireless channel (13), about the antenna assembly properties, including the supported bands, current load, and/or operator.

3. The antenna assembly according to claim 1, wherein the first wireless channel (12) differs from the second wireless channel (13) by a signal power, polarization and/or signal band.

4. The antenna assembly according to any of previous claims, wherein the controller (34) comprises a data converter (35) configured to convert data between different communication standards.

5. The antenna assembly according to any of previous claims, comprising a plurality of antennas (31 n) of the same type as the first antenna (31) and/or a plurality of antennas (32n) of the same type as the second antenna (32).

6. A method for sharing resources of an antenna in a wireless communication system over a plurality of external devices (10), the method comprising:
- providing an antenna assembly (30) according to any of claims 1-5;
- at the antenna assembly (30):
- receiving a request from the external device (10) to access to resources of the antenna assembly (30); and
- allowing the external device (10) to access the first wireless channel (12) via the second wireless channel (13).

7. The method according to claim 6, further comprising determining (102) whether the external device (10) has access rights to use the resources of the antenna assembly (30).

8. A computer program comprising program code means for performing all the steps of the method according to any of claims 6-7 when said program is run on a computer.

9. A computer readable medium storing computer-executable instructions performing all the steps of the method according to any of claims 6-7 when executed on a computer.

10. A wireless communication system comprising an antenna assembly (30) configured to sharing resources of the antenna assembly (30) according to any of claims 6-7.

11. A method for wireless communication, the method comprising:
• providing a mobile device (10) configured to communicate via a first channel (12) by means of the mobile device antenna;
• discovering (201), by the mobile device (10), a possibility to communicate via the first channel (12), by means of an antenna assembly (30) according to any of claims 1-5;
• determining (202) whether a quality of service of the first channel (12) provided by the antenna assembly (30) is superior with respect to the quality of service provided by the mobile device antenna; and
• in case the quality of service provided by the antenna assembly (30) is superior with respect to the quality of service provided by the mobile device antenna, communicating (204) with the antenna assembly (30) to communicate via the first channel via the antenna assembly (30).

12. The method according to claim 11, wherein the step of discovering (201) is effected via a second communication channel (13).

13. The method according to any of claims 11-12, wherein the step of discovering (201) includes determining whether a service provided by the antenna assembly (30) is compliant with the service offered by the mobile device's internal antenna.

14. The method according to any of claims 11-12, wherein the quality of service is one or more parameters selected from a group comprising: a bit rate, an error rate, a ping time, a signal strength, a signal to noise ratio.
